# EUROPÄISCHE PATENTSCHRIFT

(11) **EP 2 917 698 B1**
(45) Veröffentlichungstag und Bekanntmachung des Hinweises auf die Patenterteilung: **06.09.2017**
(21) Anmeldenummer: 14750303.1
(22) Anmeldetag: 04.07.2014
(51) Int. Cl.: G01D 5/20, G01D 5/22

(54) **INDUKTIVER SENSOR MIT INTEGRIERTER WEICHMAGNETISCHER SCHICHT UND VERFAHREN ZU DESSEN HERSTELLUNG**
INDUCTIVE SENSOR WITH EMBEDDED SOFTMAGNETIC LAYER AND METHOD FOR MANUFACTURING THE SAME
CAPTEUR INDUCTIF AVEC UNE COUCHE NOYEE EN MATÉRIAU MAGNÉTIQUE DOUX ET SON PROCEDE DE FABRICATION

(30) Priorität: 28.08.2013 DE 102013217150; 04.02.2014 DE 102014201975
(43) Veröffentlichungstag der Anmeldung: 16.09.2015
(73) Patentinhaber: Micro-Epsilon Messtechnik GmbH & Co. KG, 94496 Ortenburg (DE)
(72) Erfinder: PFAFFINGER, Christian, 94099 Ruhstorf a. d. Rott (DE); GROEMMER, Werner, 94496 Ortenburg (DE); WISSPEINTNER, Karl, 94496 Ortenburg (DE); SCHALLMOSER, Guenter, 94099 Ruhstorf (DE); WISSPEINTNER, Thomas, 94496 Ortenburg (DE)
(74) Vertreter: Patent- und Rechtsanwälte Ullrich & Naumann
(86) Internationale Anmeldenummer: PCT/DE2014/200302
(87) Internationale Veröffentlichungsnummer: WO 2015/028002

(56) Entgegenhaltungen:
- WO-A2-2007/003913
- WO-A2-2008/074317
- DE-A1- 19 621 886
- US-B1- 6 605 939

## Beschreibung

Die Erfindung betrifft ein Sensorelement für einen induktiven Sensor zur Weg- oder Abstandsmessung, einen das Sensorelement umfassenden Sensor sowie ein Verfahren zur Herstellung des Sensorelements und des Sensors.

Aus der Praxis sind MDS-Sensoren für Standardanwendungen bekannt, die mit Flachspulen auf PCB-Basis ausgeführt sind. Vergleichbare induktive Positionssensoren sind beispielsweise aus den Dokumenten US 6,605,939 B1, WO 2007/003913 A2 und WO2008/074317 A2 bekannt.

Bei dieser MDS-Variante wird einer
Messspule oder einem Übertrager eine dünne ferromagnetische Folie zugeordnet. Dies kann auf unterschiedliche Arten erfolgen. Die bisherigen Lösungen, wie sie aus der Praxis bekannt sind, sind folgende:
Die ferromagnetische Folie wird mittels Klebeschicht (beidseitiges Klebeband oder Trägerband mit Klebeschicht) auf einen Folienträger aufgeklebt. Der Folienträger ist vorzugsweise eine Platine, die eine Kupferfläche (Wirbelstromsensor) oder eine weitere Spule bzw. zwei nebeneinanderliegende Leiterbahnen (Übertrager) direkt unter dem Bereich, auf dem die Folie aufgeklebt wird, aufweist. Um kapazitive Störeinflüsse, z.B. durch Berührung, zu minimieren, muss die Kupferschicht auf ein festes Potential bezüglich der auswertenden Elektronik gelegt werden, bzw. muss die zusätzliche Spule kontaktiert werden. In beiden Fällen ist es nötig, Kontaktiermöglichkeiten zu schaffen. Die Verarbeitung von Hand ist für kleine Stückzahlen ein gangbarer Weg.

Der vorliegenden Erfindung liegt nun die Aufgabe zugrunde, ein Sensorelement für einen induktiven Sensor zur Weg- oder Abstandsmessung, einen das Sensorelement umfassenden Sensor sowie ein Verfahren zur Herstellung des Sensorelements und des Sensors anzugeben, wonach eine automatische Fertigung, insbesondere die Fertigung für größere Stückzahlen, mit reproduzierbaren Ergebnissen möglich ist.

Das Sensorelement und der Sensor sollen kostengünstig in der Herstellung sein.

Voranstehende Aufgabe ist durch die Merkmale der nebengeordneten Patentansprüche 1, 8 und 13 gelöst. Es gibt verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Ansicht ein Ausführungsbeispiel eines erfindungsgemäßen Flachsensors mit erfindungsgemäßem Sensorelement, im Konkreten ein MDS mit jeweils zwei ferromagnetischen und zwei leitfähigen Folien,
- Fig. 2: in einem schematischen Diagramm den für sich gesehen bekannten Verlauf der magnetischen Permeabilität µ über der magnetischen Feldstärke H,
- Fig. 3: in einer schematischen Ansicht ein Ausführungsbeispiel eines erfindungsgemäßen Sensors mit erfindungsgemäßem Sensorelement, wobei der Folienträger auf einer Platine mit einer Spule bestückt ist,
- Fig. 4: in einer schematischen Ansicht eine weitere Ausführungsform, wonach ein Folienpaket auf einer Platine aufgebracht ist,
- Fig. 5: in einer schematischen Ansicht einen Leiterplattenlagenaufbau,
- Fig. 6: in einer schematischen Ansicht einen Folienstreifen, der bei der Leiterplattenherstellung als Streifen eingelegt wird und
- Fig. 7: in einer schematischen Ansicht einen MDS zur HT-Anwendung.

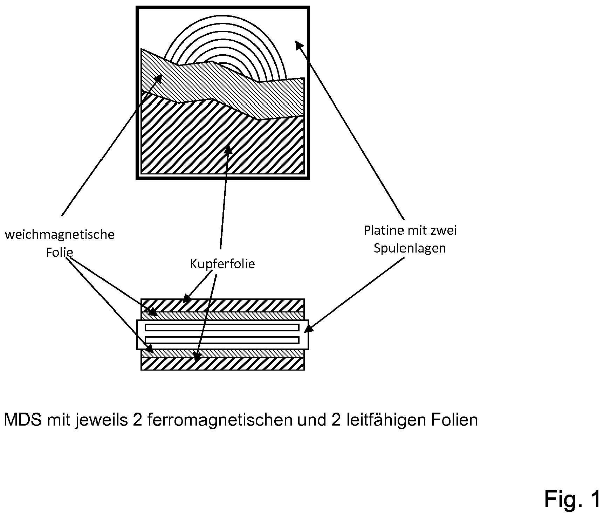

Den sich aus der zugrundeliegenden Aufgabe ergebenden Anforderungen kommt die Realisierung eines Flachsensors am nächsten. Im einfachsten Falle besteht der Aufbau aus einer Folie und einer Flachspule. Dies kann durch Hinzufügen einer weiteren Folie auf der noch nicht bedeckten Spulenseite hinsichtlich der Sensorempfindlichkeit verbessert werden. Eine weitere Effektvergrößerung wird durch zusätzliches Anbringen einer leitfähigen, nicht ferromagnetischen Folie (z. B. aus Kupfer oder Aluminium) auf der jeweils spulenabgewandten Seite der weichmagnetischen Folie erreicht. Dies zeigt Figur 1.

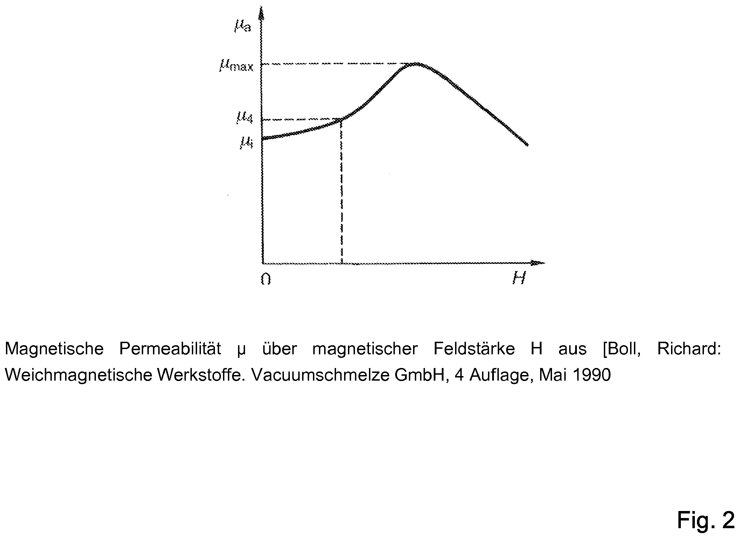

Die Spule wird in einem Frequenzbereich betrieben, in dem die Eindringtiefe in der Größenordnung der Foliendicke liegt. Der Verlauf der relativen Permeabilität in Abhängigkeit von der Feldstärke und damit in Abhängigkeit von dem beeinflussenden Magnetfeld ist in Figur 2 beispielhaft gezeigt. Mit Annähern des Magneten und nach Überwinden ihres maximalen Wertes fällt die relative Permeabilität. Die fallende Flanke ist der Arbeitsbereich für den MDS. Das hat zu Folge, was über die Berechnung der Eindringtiefe für Wirbelströme leicht nachvollziehbar ist, dass die Eindringtiefe in der weichmagnetischen Folie steigt. Da die weichmagnetische Folie leitfähig ist, bilden sich in ihr Wirbelströme, die ein Gegenfeld zum Magnetfeld des Wirbelstromsensors ausprägen. Um die dadurch verursachte Vorbedämpfung so klein wie möglich zu halten, sollte die Folie eine möglichst geringe Leitfähigkeit aufweisen.

Am Anfang des Arbeitsbereichs, d.h. bei weiter entferntem Magnet, ist die Permeabilität hoch und die Eindringtiefe gering, so dass der Wirbelstromsensor praktisch nur durch die Permeabilität der Folie beeinflusst wird. Dies führt zu einer Erhöhung der Induktivität der Spule. Am Ende des Arbeitsbereichs, d.h. bei stark angenähertem Magnet, ist die Permeabilität sehr gering, wodurch die dämpfenden Eigenschaften der Leitfähigkeit (Gegenfeld) überwiegen. Gleichzeitig steigt die Eindringtiefe über die Foliendicke hinaus an, was zur Folge hat, dass die Wirbelströme abnehmen und somit auch das Gegenfeld immer geringer wird. Dies führt zu einer Abschwächung des Messeffekts. Die zusätzliche leitfähige, nicht ferromagnetische Folie gemäß der Ausführung in Figur 1 führt bei Eindringtiefen, die über die Dicke der weichmagnetischen Folie hinausgehen, zu zusätzlichen Wirbelströmen, die, begünstigt durch den geringen spezifischen Widerstand und einer relativen Permeabilität nahe 1, die Spule auch dann noch beeinflussen, wenn die Eindringtiefe über die ferromagnetische Folie hinausgeht. Dies wirkt der Verminderung des Messeffekts, der durch die Änderung der Permeabilität vorgegeben ist, entgegen.

Der Wirbelstromsensor verhält sich dann bei sehr geringem Magnetabstand vergleichbar mit der Situation, wenn er mit geringem Abstand gegen leitfähiges Material messen würde, die ferromagnetische Folie also nicht vorhanden wäre. Die Wirbelstromsensorspule hat dann die geringste Induktivität. Der symmetrische Aufbau auf beiden Seiten des Wirbelstromsensors führt, unter Einfluss des Magneten, zu einer sehr großen Impedanzänderung, die durchaus mehr als 100% betragen kann. Ein derart großer Messeffekt führt zu einer hohe Auflösung und Sensorempfindlichkeit. Daraus ist klar nachzuvollziehen, dass die resultierenden Sensoreigenschaften auch von den aufbaubedingten Parametern abhängig sind. Durch eine geschickte Anordnung von Spule und Folie sowie durch Auslegung von Größe und Form kann über die fallende Flanke der Permeabilität ein nahezu linearer Zusammenhang zwischen Magnetabstand und Messsignal hergestellt werden.

Ebenfalls über die Eindringtiefe und damit die Schirmwirkung kann die Funktionsweise des MDS beschrieben werden, wenn er als "Übertrager" aufgebaut wird. Die ferromagnetische Folie befindet sich zwischen zwei Spulen, die jeweils, um eine wirtschaftliche Lösung zu bieten, als Flachspule in Leiterplattentechnik ausgeführt sind. Mit dem in Figur 2 gezeigten prinzipiellen Kennlinienverlauf und davon ausgehend, dass nur rechts von µₘₐₓ gearbeitet wird, ergibt sich folgender Effekt:
Bei großem Magnetabstand ist auch das wirksame µᵣ in der Folie groß und damit auch die Schirmwirkung. Der Kopplungsfaktor von der ersten Spule (Primärspule) auf die zweite Spule (Sekundärspule) ist klein. Die übertragene Spannungsamplitude ist damit gering. Bei Annähern des Magneten vermindert sich die relative Permeabilität bis zu einem Minimalwert, der der nächstmöglichen Position des Magneten entspricht. In diesem Fall ist die relative Permeabilität minimal und damit die magnetische Kopplung zwischen Primärseite und Sekundärseite maximal. Die auf der Sekundärspule messbare Spannungsamplitude ist nun maximal. Eine Signalverstärkung kann einfach über das Windungsverhältnis der beiden Spulen erreicht werden. Auch dieser Aufbau zeigt eine sehr große Empfindlichkeit auf die Magnetposition und bietet zudem den Vorteil, dass keine Impedanzen, sondern nur Strom- oder Spannungsamplituden, ausgewertet werden müssen. Auch hier ist klar, dass die Aufbautoleranzen direkt auf die Reproduzierbarkeit des Sensorelementes eingehen. Der Übertrager kann in einer Minimalkonfiguration auch in Form von nur zwei nahe nebeneinander liegenden Leiterbahnen ausgeführt sein, die über die weichmagnetische Folie gekoppelt sind.

Um in beiden Fällen die Streuungen möglichst gering zu halten und trotzdem auf Trimmen verzichten zu können, ist es nötig, einen entsprechenden Sensoraufbau in einem sicheren Herstellprozess umzusetzen.

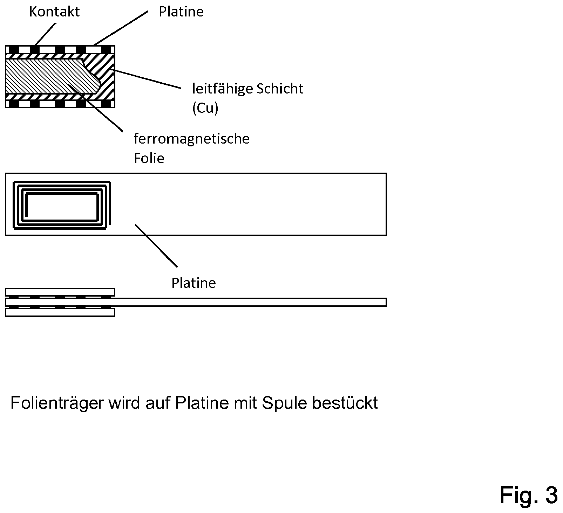

Ist der Folienträger entsprechend Figur 3 als Platine ausgeführt, kann diese eine laminierte Kupferfolie enthalten. Auf der Unterseite der Platine, d.h. auf der der Leiterplatte zugewandten Seite, wird weichmagnetische Folie aufgeklebt. Die Platine wird wie eine Leiterplatte bestückt. Die Spule ist integriert. Durch Lötpaste bzw. durch einen Lötprozess ist der Abstand der Platine und damit der Folie zur Spule nur bedingt reproduzierbar.

Wird der Folienträger als Platine ausgeführt, können seitlich oder auf der Unterseite Lötflächen angebracht werden. Zu beachten ist aber, dass diese Lötflächen einen gewissen Abstand, bedingt durch die Klebeschicht und die ferromagnetische Folie zur messenden Flachspule aufweisen. Dies kann nur durch entsprechenden Lotpastenauftrag entsprechend den voranstehenden Ausführungen überbrückt werden. Somit ist ein automatisiertes standardisiertes Bestücken möglich. Da der Abstand der Messspule zur ferromagnetischen Folie direkt in das Messergebnis eingeht, ist auf Grund der Abstandstoleranzen bedingt durch die Prozessschwankungen und den erhöhten Lotpastenauftrag auch eine erhöhte Streuung unter den so erzeugten Messelementen zu berücksichtigen. Eine Verbesserung bringt das zusätzliche Beschweren oder Verspannen des Folienträgers beim Lötvorgang. Dies ist aber zusätzlicher Aufwand und steht einer standardisierten Fertigung entgegen.

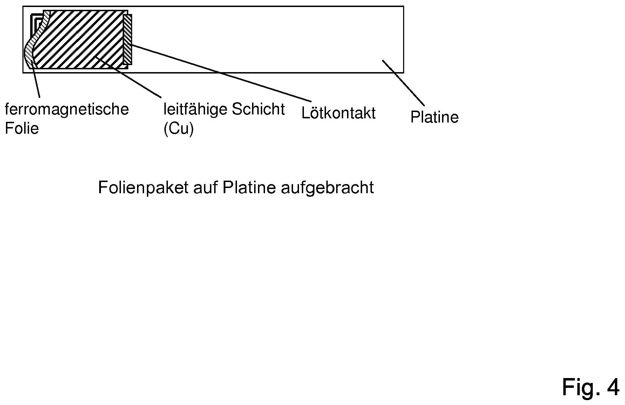

Eine Verbesserung ist der Ausführungsform gemäß Figur 4 entnehmbar, wonach weichmagnetische Folie auf Kupferfolie (ohne Platine) als Element bestückt wird. Genauergesagt ist hier der Folienträger als weitere leitfähige Folie ausgeführt (nur möglich bei der Variante mit der zusätzlichen leitfähigen Schicht). Die ferromagnetische Folie wird in einem vorgelagerten Prozessschritt unter Zuhilfenahme einer Klebeschicht auf eine leitfähige Folie (Kupfer, Alu, etc.) aufgebracht. Dies kann z.B. in einem Rolle-zu-Rolle-Prozess erfolgen. Das entsprechend abgelängte Folienpaket kann ebenfalls automatisiert bestückt werden. Ein zusätzliches Anpressen ist für die Prozessstabilität sinnvoll. Die Kontaktierung der Kupferfläche ist über einen Lotschluss auf die Kupferfolie gegeben. Dabei gibt es folgende Möglichkeiten:
Das Folienpaket überdeckt im Randbereich den Lotpastendruck, wobei die Kupferfolie über die ferromagnetische Folie ragen sollte oder ein zusätzliches partielles Löten, dem eigentlichen Lötvorgang nachgelagert sein sollte. Dies garantiert die sichere leitfähige Verbindung der gleichgroßen Folienteile. Die Streuung der Sensorelemente zueinander ist neben den Materialschwankungen hauptsächlich durch die Platziergenauigkeit des Folienpaketes relativ zur Messspule beeinflusst. Aber auch eine Änderung der Klebeschichtdicke wirkt sich auf die Steuerung aus, wenn gleich deutlich geringer als der vorher beschriebene Abstand durch den Lötprozess.

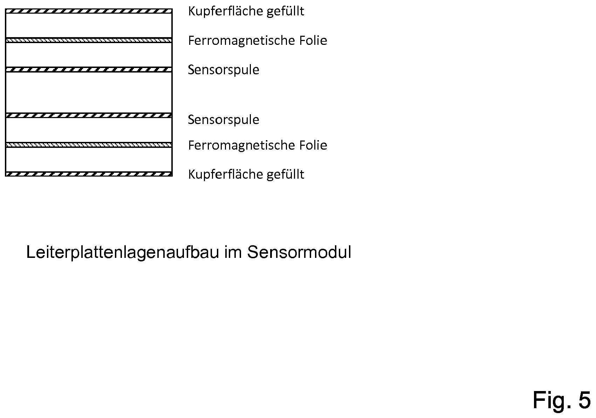

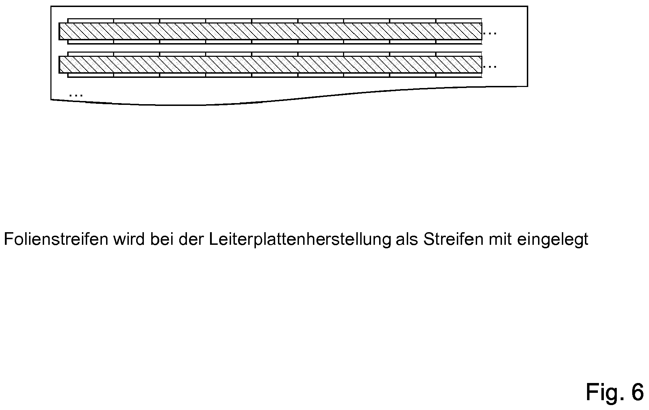

Ein deutlicher Schritt, das Herstellverfahren in einem standardisierten Prozess ablaufen lassen zu können, ist in Bezug auf Figur 5 erläuterbar, wonach die Spule, die weichmagnetische Folie und ggf. der Kupferfolie in einer Leiterplatte bzw. Platine integriert sind. Ziel ist es dabei, ein Sensormodul zu schaffen, das ähnlich wie ein Bauteil beliebig auf einer Leiterplatte oder allgemeiner einem Schaltungsträger platziert werden kann. Die Spule wird wieder durch den Leiterplattenaufbau hergestellt:
Nach den Spulenlagen und einer oder mehreren Isolierlagen wird die ferromagnetische Folie eingelegt (vgl. Figur 6). Eine weitere (oder mehrere) Isolierlage befindet sich über der ferromagnetischen Folie. Das einfachste Sensormodul kann so aufgebaut werden. Eine weitere leitfähige Lage bzw. Spulenlage(n) ermöglicht den Aufbau wie er eingangs beschrieben wurde (Übertrager oder Wirbelstromsensor).

Um die Empfindlichkeit des Sensormoduls mit der zusätzlichen Kupferlage weiter zu steigern, kann symmetrisch zur Spulenlage der Lagenaufbau in die zweite Richtung ergänzt werden. Die äußere Kupferfläche kann mittels zusätzlicher Lackierung (Lötstopplack) geschützt werden. Die Spulen- und Foliengeometrie sowie die Modulabmessungen und die Abstände der funktionalen Teile des Sensormoduls können an die jeweilige Messanforderung angepasst werden. Die Spulenanschlüsse und die Kontaktflächen für die leitfähigen Flächen können seitlich mittels Randmetallisierung oder auch auf den Flächen ausgeführt werden. Eine seitliche Kontaktiermöglichkeit erleichtert den optischen Test nach der Bestückung im automatisierten Prozess, stabilisiert den Aufbau durch die zusätzliche Verbindung der Einzellagen und ist mit nur einer minimalen Vergrößerung des Sensormoduls herzustellen. Beide Kontaktvarianten ermöglichen eine automatisierte Bestückung auf der Fläche (SMD). Das ferromagnetische Material liegt entweder als Band oder als flächige Folie vor.

Das Material muss, wenn es in Bandform vorliegt, im einfachsten Fall vor dem Einbringen in geeignete Streifen abgelängt werden, wobei die Streifenlänge einem Vielfachen der Sensormodullänge entsprechen kann. Das Ablängen auf die gewünschte Modullänge erfolgt durch Vereinzeln des fertigen Sensormoduls im Fertigungsnutzen. Sind Durchkontaktierungen im Bereich der Folie nötig ist und ein elektrischer Kontakt zur Folie zu vermeiden, was der Fall ist, wenn Signalleitungen geführt oder die Spule in einer weiteren Lage fortgeführt werden soll, so muss das ferromagnetische Band in den entsprechenden Bereichen bearbeitet werden z.B. durch Ausstanzen. Die für die Herstellung der Spule nötige Durchkontaktierung kann aber auch als "Blind-Via" ausgeführt werden, wodurch eine weitere mechanische Bearbeitung der Folie entfällt. Das Einlegen zusätzlicher Streifen oder Freiformen ist vor allem bei der Herstellung sogenannter Starrflex-Leiterplatten üblich.

Liegt das Material flächig vor, kann die gewünschte Struktur ausgestanzt und können die Ausrichtungsmarkierungen für den gesamten Herstellnutzen mit berücksichtigt werden. Das Material kann dann direkt als eigene Lage eingebracht werden. Somit ist gewährleistet, dass für den Aufbau und der Verarbeitung des Sensormoduls bestehende Stückzahlprozesse genutzt und nur minimal angepasst werden müssen. Diese Technologie kann auch genutzt werden, um das Sensormodul und die Auswerteschaltung auf derselben Leiterplatte zu integrieren. Dann entfällt ein zusätzliches Bestücken des Sensorelementes. Es ist aber zu berücksichtigen, dass, je nach Schaltungsgestaltung und Stückzahl, ein Auftrennen der beiden Funktionseinheiten sinnvoll ist.

Weitere relevante Merkmale für die Integration in die Leiterplatten sind u.a.
- Schutz des Sensorelements/Integration der Folie in die Leiterplatte, Schutz vor Umwelteinflüssen;
- automatisierter Prozess erlaubt geringere Toleranzen; Toleranzen sind kleiner, Reproduzierbarkeit, definierte Abstände zwischen Folie und Spule;
- kostengünstige Serienfertigung bereits bei mittleren Stückzahlen;
- Sensorelement ist zusammen mit Auswerteschaltung in einer Leiterplatte integriert;
- höhere Miniaturisierung und Integration (Auswerteschaltung über dem Sensorelement); Integration des Sensorelements in die Leiterplatte erlaubt es, auf der Oberfläche der Leiterplatte die Auswerteelektronik zu platzieren. Dies führt zu einer Verkleinerung des Bauraums;
- zusätzlich Kupferfolie zur Erhöhung der Empfindlichkeit bereits Bestandteil des Prozesses; das Einbringen einer Kupferlage in die Platine entspricht dem fertigungstechnischen Standard, woraus sich ein Kostenvorteil ergibt;
- über die Orientierung der Folie kann die Linearität beeinflusst werden; Länge, Breite oder Form der Folie oder der Spule lässt sich nutzen, um die Kennlinie gezielt einzustellen bzw. zu beeinflussen;
- Herstellung eines Leiterbahnsensors (zwei parallele Leiterbahnen ist möglich); Jalousie-Trafo als Übertrager realisierbar.

Eine weitere Möglichkeit, für ein Sensormodul, das mit bewährten Standardprozessen hergestellt werden kann und auch noch das Entwicklungsziel des erhöhten Temperaturbereiches erfüllt, ergibt sich dadurch, dass das für die Messung benötigte ferromagnetische Material mit Keramikschaltungsträger kombiniert wird. Um dies umsetzen zu können ist es nötig, ferromagnetisches Material zu verwenden, das einen erhöhten Temperaturbereich abdecken kann. Amorphe Materialien zeigen bereits bei Temperaturen weit unter der Curie-Temperatur eine grundsätzliche Veränderung der magnetischen Eigenschaften. Mit vergleichbaren Eigenschaften und für den Einsatz unter höheren Temperaturen sind nanokristalline Materialien geeignet. Diese weisen zusätzlich noch eine größere Sättigungsinduktion auf und ermöglichen dadurch eine Erweiterung des Messbereichs bei vergleichbarer Geometrie (Spule und Folie). Diese Materialien haben aber den Nachteil, dass zwar die gewünschten magnetischen Eigenschaften nach einer Temperaturbehandlung sichergestellt sind, aber sie mechanisch sehr instabil werden. Eine weitere Verarbeitung in diesem Zustand ist schwierig und verhindert einen sicheren Prozess für die Herstellung eines Hochtemperatursensorelementes. Kann jedoch erreicht werden, dass die Folie vor der Temperaturbehandlung weitestgehend verarbeitet wird, so spielt dieser Nachteil keine Rolle, denn das Basismaterial für die nanokristlline Folie ist vor der Temperaturbehandlung im amorphen Zustand und ist mechanisch durchaus belastbar und damit deutlich einfacher zu handhaben.

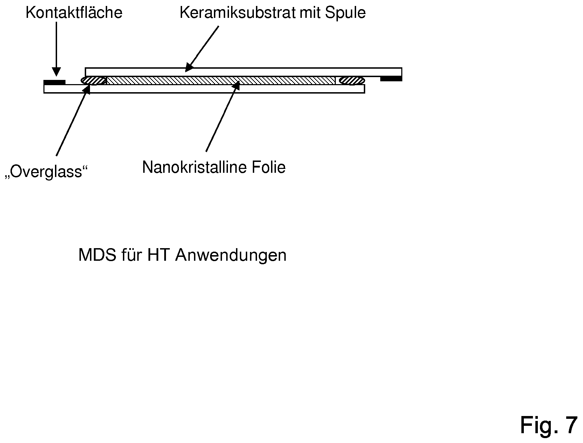

Es kann ähnlich wie bei der Integration in die Leiterplatte mit Standardtechnologien wie folgt gefertigt werden:
Auf ein Keramiksubstrat wird entsprechend der Darstellung in Figur 7 in bekannter Dickschichttechnik die gewünschte Spulengeometrie aufgebracht und "gebrannt" Eine abschließende isolierende Schicht (z.B. Overglas) bedeckt die Spule.

Anschließend wird ein oder werden mehrere Schicht(en) weiterer Druck mit "Overglas" (Glaskleber - eigentlich zum Schutz der Keramik als abschließende Schicht) umlaufend außerhalb der Spule und der späteren Position der nanokristallinen Folie aufgebracht. Die Höhe des Auftrags richtet sich nach der Dicke der nanokristallinen Folie, die vorher auf die entsprechende Größe zugeschnitten ist. Das Folienstück wird in den so freibleibenden Bereich eingelegt. Ein weiteres Keramiksubstrat soll den beschriebenen Bereich abdecken. Das zweite Keramiksubstat kann, wie das erste, mit einer Spule bedruckt werden, damit entweder durch Serienschaltung die Induktivität erhöht, oder ein "Übertrager"-Aufbau realisiert werden kann. Ein anschließendes Aushärten des "Overglas" bewirkt gleichzeitig die nötige Temperaturbehandlung der amorphen Basis, so dass danach ein hermetisch abgeschlossenes nanokristallines Folienstück in Keramik integriert vorliegt. Ein weiterer Vorteil dieser Methode ist, dass die Schutzgasanforderung während der Temperaturbehandlung nicht zwingend notwendig ist. Die Gefahr einer Korrosion des Materials bei der Temperaturbehandlung ist durch den luftdichten Abschluss in der Keramik ganz erheblich reduziert.

Ein Aufbau, der auch erhöhten Temperaturanforderungen genügt, ist die Herstellung des Sensorelementes in LTCC Technologie. Dabei besteht ebenfalls die Möglichkeit, die Relativlage einer Spule zu einem ferromagnetischen Material herzustellen. Das ferromagnetische Material ist im Idealfall eine mit amorphem Material versetzte Keramikfolie, welche in LTCC-Technologie üblichem Mehrlagen-Aufbau mit Sensorspule gesintert wird. Die Vorteile sind auch in diesem Fall die Verwendung von Standardtechnologie, um eine wirtschaftliche und prozesssichere Lösung bieten zu können. Der Schichtaufbau kann wie beim Leiterplattenaufbau weiter optimiert werden. So ist die Lagenfolge für den Fall eines transformatorischen Sensoraufbaus wie folgt:
Ausgehend von einer Decklage, Spulenlage(n), Isolierlage(n), ferromagnetische Lage, Isolierlage(n), Spulenlage(n), Decklage ermöglicht die LTCC Technologie ermöglicht aber auch den in Leiterplattentechnik beschriebene Aufbau mit nur einer Spule, aber mit der sinnvollen Ergänzung einer leitfähigen Schicht: Decklage, leitfähige Schicht, (evtl. Isolierlage(n) - für die Funktion nicht notwendig), ferromagnetische Lage, Isolierlage(n), Spulenlage(n), Isolierlage(n), (evtl. Isolierlage(n) - für die Funktion nicht notwendig), leitfähige Schicht, Decklage.

Da die Verarbeitung ferromagnetischer Materialien immer neue Ansätze ermöglicht, ist eine Integration des Sensorprinzips in einem IC der nächste Schritt. Eine aus der Praxis für sich gesehen bereits bekannte integrierte Induktivität kann als Basis für ein Sensormodul nach dem MDS Prinzip verwendet werden. Die Spule wird in einem standardisierten Prozess hergestellt. Das Aufbringen einer ferromagnetischen Schicht direkt auf einen Wafer komplettiert den Sensoransatz. So ist aus der Praxis ein neues magnetisches Material bekannt, welches Induktivitäten ermöglicht, die nur 150 µm hoch sind. Damit rückt eine integrierte Stromversorgung auf einem Chip in greifbare Nähe. Bei dem Material handelt es sich um eine amorphe Eisen-Kobalt-Legierung (FCA für Fe-Co-Alloy). Das Interessante dabei ist, dass sich das FCA-Material über einen galvanischen Prozess - wie er aus der Fertigung von Festplatten bekannt ist - sehr einfach auf einem Silizium-Wafer abscheiden lässt. Mit Hilfe dieses Prozesses lassen sich die Fertigungskosten auf einem niedrigen Niveau halten. Der fertig beschichtete Wafer wird in die Magnet-Dies vereinzelt, die Dies wandern auf ein Substrat, auf dem bereits eine Kupferspirale aufgebracht ist. Nun muss nur noch das Controller-IC mit den integrierten MOSFETs auf dieses Substrat oder direkt auf den Magnet-Chip gesetzt werden. Fertig ist die Stromversorgung auf dem Chip. Die herkömmlichen Spulen beziehungsweise die Induktivitäten, die bisher die Größe der geschalteten Stromversorgung bestimmt haben, fallen weg. Wird diese Technologie genutzt, kann ähnlich wie bei AMR/GMR Sensoren eine Integrierte Schaltung zusammen mit der Sensorspule und dem ferromagnetischen Material in einem Chip hergestellt und für den Massenmarkt zur Verfügung gestellt werden. Temperaturkompensation, Linearisierung und Kalibration zu Integrieren ist sinnvoll. Durch die deutlich kleineren Abmaße werden die Sensoren größere Empfindlichkeiten aber auch kleinere Messbereiche aufweisen. Das Sensorelement kann aber leicht kaskadiert und verrechnet werden. Da je nach Auswerteschaltung nicht die Güte der Induktivität ausschlaggebend ist, kann die Spule auch direkt auf Silizium hergestellt werden.

Hinsichtlich weiterer vorteilhafter Ausgestaltungen des erfindungsgemäßen Sensorelements oder Sensors mit einem Sensorelement und des erfindungsgemäßen Verfahren zur Herstellung des Sensorelements wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele des erfindungsgemäßen Sensorelements oder Sensors mit einem Sensorelement und des erfindungsgemäßen Verfahren zur Herstellung des Sensorelements lediglich zur Erörterung der beanspruchten Lehre dienen, diese jedoch nicht auf die Ausführungsbeispiele einschränken.

## Patentansprüche

1. Sensorelement für einen induktiven Sensor zur Weg- oder Abstandsmessung mittels eines sich durch den Abstand zum Messobjekt ändernden aber zeitlich konstanten Magnetfeldes, beispielsweise in Form eines am Messobjekt befestigten Magneten, wobei das Sensorelement eine Flachspule und eine weichmagnetische Folie zur Überdeckung der Flachspule aufweist, wobei
die weichmagnetische Folie in ein Substrat integriert ist,
der Arbeitsbereich des Sensorelements im Bereich der fallenden Flanke der Permeabilitätskennlinie der weichmagnetischen Folie liegt, die Flachspule und die weichmagnetische Folie derart angeordnet und in Bezug auf Größe und Form derart ausgelegt sind, dass im Arbeitsbereich des Sensorelements ein nahezu linearer Zusammenhang zwischen dem Abstand des Magneten vom Sensorelement und dem Messsignal des Sensorelements hergestellt ist.

2. Sensorelement nach Anspruch 1, **dadurch gekennzeichnet, dass** beidseits der Flachspule eine weichmagnetische Folie angeordnet ist.

3. Sensorelement nach Anspruch 1 oder 2, **dadurch gekennzeichnet, dass** zumindest auf einer Seite der Flachspule eine leitfähige Folie, beispielsweise aus Kupfer oder Aluminium, ausgebildet ist.

4. Sensorelement nach einem der Ansprüche 1 bis 3, **dadurch gekennzeichnet, dass** die Flachspule ein oder mehrlagig ausgebildet ist.

5. Sensorelement nach einem der Ansprüche 1 bis 4, **dadurch gekennzeichnet, dass** zwei Flachspulen, vorzugsweise in Leiterplattentechnik ausgeführt, vorgesehen sind und dass die weichmagnetische Folie zwischen den beiden Flachspulen angeordnet ist.

6. Sensorelement nach einem der Ansprüche 1 bis 5, **dadurch gekennzeichnet, dass** als Folienträger eine leitfähige Folie dient, insbesondere eine Kupferfolie, auf die die weichmagnetische Folie aufgebracht ist.

7. Sensor mit einem Sensorelement nach einem der Ansprüche 1 bis 6, **dadurch gekennzeichnet, dass** als Folienträger eine Platine dient, die eine vorzugsweise laminierte Kupferfolie umfasst, wobei auf der Unterseite der Platine, auf der der Leiterplatte zugewandten Seite, die weichmagnetische Folie angeordnet, insbesondere aufgeklebt sein kann und wobei die Flachspule in die Leiterplattenanordnung löttechnisch, vorzugsweise mit überbrückender Lötpaste, integriert sein kann.

8. Sensor mit einem Sensorelement nach Anspruch 7, **dadurch gekennzeichnet, dass** die Flachspule (N), die weichmagnetische Folie und ggf. die Kupferfolie in einer Leiterplatte bzw. Platine integriert sind.

9. Sensor nach Anspruch 7 oder 8, **dadurch gekennzeichnet, dass** der Sensor ein Sensormodul bildet, welches beliebig auf einer Leiterplatte oder auf einem Schaltungsträger angeordnet bzw. dort integriert ausgeführt ist.

10. Verfahren zur Herstellung eines Sensors, unter Verwendung eines Sensorelements nach einem der Ansprüche 1 bis 6, **gekennzeichnet durch** Erzeugen einer mehrlagigen Anordnung, wonach zumindest nach der Spulenlage bzw. den Spulenlagen und einer oder mehreren Isolierlagen eine weichmagnetische Folie eingelegt wird, wobei über der weichmagnetischen Folie eine weitere Isolierlage angelegt werden kann.

11. Verfahren nach Anspruch 10, **dadurch gekennzeichnet, dass** beidseits, symmetrisch zu der Spulenlage bzw. den Spulenlagen der Lagenaufbau in beide Richtungen ergänzt wird, beispielsweise durch eine weichmagnetische Folie und eine darüber angeordnete Kupferfläche/Kupferfolie.

12. Verfahren nach Anspruch 10 oder 11, **dadurch gekennzeichnet, dass** die Lagenanordnung, vorzugsweise beidseits, durch eine zusätzliche Lackierung geschützt wird.

13. Verfahren nach einem der Ansprüche 10 bis 12, **dadurch gekennzeichnet, dass** Spulenanschlüsse und Kontaktflächen für die leitfähigen Flächen entweder mittels seitlicher Randmetallisierungen oder durch metallische Durchkontaktierungen erzeugt werden.

14. Verfahren nach einem der Ansprüche 10 bis 13, **dadurch gekennzeichnet, dass** das Material zunächst in Bandform vorliegt und in geeignete Streifen abgelängt wird, wobei die Streifenlänge einem vielfachen der Sensormodullänge entsprechen kann.

15. Verfahren nach Anspruch 14, **dadurch gekennzeichnet, dass** das Ablängen auf die gewünschte Modullänge durch Vereinzelung des fertigen Sensormoduls im Fertigungsnutzen erfolgt.

## Claims

1. Sensor element for an inductive sensor for path or spacing measurement by means of a magnetic field which changes as a result of the spacing with respect to the measurement object but which is temporally constant, for example, in the form of a magnet which is secured to the measurement object, wherein the sensor element has a flat coil and a magnetically soft film for covering the flat coil,
wherein the magnetically soft film is integrated in a substrate,
the operating range of the sensor element is located in the region of the descending flank of the permeability characteristic line of the magnetically soft film, the flat coil and the magnetically soft film are arranged in such a manner and configured in such a manner in terms of size and shape that in the operating range of the sensor element an almost linear relationship between the spacing of the magnet from the sensor element and the measurement signal of the sensor element is produced.

2. Sensor element according to claim 1, **characterised in that** a magnetically soft film is arranged at both sides of the flat coil.

3. Sensor element according to claim 1 or claim 2, **characterised in that** a conductive film, for example, of copper or aluminium, is formed at least at one side of the flat coil.

4. Sensor element according to any one of claims 1 to 3, **characterised in that** the flat coil is constructed with one or more layers.

5. Sensor element according to any one of claims 1 to 4, **characterised in that** two flat coils, preferably constructed with printed circuit board technology, are provided and **in that** the magnetically soft film is arranged between the two flat coils.

6. Sensor element according to any one of claims 1 to 5, **characterised in that** a conductive film, in particular a copper film, acts as a film carrier to which the magnetically soft film is applied.

7. Sensor having a sensor element according to any one of claims 1 to 6, **characterised in that** there acts as a film carrier a plate which comprises a preferably laminated copper film, wherein at the lower side of the plate, at the side facing the printed circuit board, the magnetically soft film can be arranged, in particular can be adhesively bonded, and wherein the flat coil can be integrated in the printed circuit board arrangement using soldering technology, preferably with bridging solder paste.

8. Sensor having a sensor element according to claim 7, **characterised in that** the flat coil (N), the magnetically soft film and where applicable the copper film are integrated in a printed circuit board or plate.

9. Sensor according to claim 7 or 8, **characterised in that** the sensor forms a sensor module which is freely arranged on a printed circuit board or on a circuit carrier or is constructed so as to be integrated at that location.

10. Method for producing a sensor, using a sensor element according to any one of claims 1 to 6, **characterised by** producing a multi-layer arrangement, according to which at least after the coil layer or the coil layers and one or more insulation layers a magnetically soft film is inserted, wherein another insulation layer can be placed over the magnetically soft film.

11. Method according to claim 10, **characterised in that** at both sides symmetrically relative to the coil layer or the coil layers the layer structure is supplemented in both directions, for example, by means of a magnetically soft film and a copper face/copper film which is arranged thereabove.

12. Method according to claim 10 or 11, **characterised in that** the layer arrangement is protected, preferably at both sides, by means of an additional paint application.

13. Method according to any one of claims 10 to 12, **characterised in that** coil connections and contact faces are produced for the conductive faces either by means of lateral edge metal coatings or by means of metal through-platings.

14. Method according to any one of claims 10 to 13, **characterised in that** the material is first present in band form and is cut into suitable strips, wherein the strip length may correspond to a multiple of the sensor module length.

15. Method according to claim 14, **characterised in that** the cutting to the desired module length is carried out by separating the completed sensor module in the production panel assembly.

## Revendications

1. Élément de capteur pour un capteur inductif pour la mesure de trajet ou de distance au moyen d'un champ magnétique variable en fonction de la distance par rapport à un objet à mesurer ou constant dans le temps, par exemple sous la forme d'un aimant fixé à l'objet à mesurer, l'élément de capteur comprenant une bobine plate et un film magnétique doux pour recouvrir la bobine plate, le film magnétique doux étant intégré dans un substrat, la zone de travail de l'élément de capteur se trouvant au niveau du flanc descendant de la courbe caractéristique de perméabilité du film magnétique doux, la bobine plate et le film magnétique doux étant disposés et étant conçus, en ce qui concerne leur taille et leur forme, de façon à ce que, dans la zone de travail de l'élément de capteur, il existe une relation presque linéaire entre la distance de l'aimant par rapport à l'élément de capteur et le signal de mesure de l'élément de capteur.

2. Élément de capteur selon la revendication 1, **caractérisé en ce qu'**un film magnétique doux est disposé des deux côtés de la bobine plate.

3. Élément de capteur selon la revendication 1 ou 2, **caractérisé en ce qu'**un film conducteur, par exemple en cuivre ou en aluminium, est disposé sur un côté de la bobine plate.

4. Élément de capteur selon l'une des revendications 1 à 3, **caractérisé en ce que** la bobine plate est monocouche ou multicouche.

5. Élément de capteur selon l'une des revendications 1 à 4, **caractérisé en ce que** deux bobines plates, de préférence constituées de circuits imprimés, sont prévues et **en ce que** le film magnétique doux est disposé entre les deux bobines plates.

6. Élément de capteur selon l'une des revendications 1 à 5, **caractérisé en ce que** le support de film est un film conducteur, plus particulièrement un film de cuivre, sur lequel le film magnétique doux est appliqué.

7. Capteur avec un élément de capteur selon l'une des revendications 1 à 6, **caractérisé en ce que** le support de film est une platine qui comprend un film de cuivre, de préférence laminé, le film magnétique doux pouvant être disposé, de préférence collé, en dessous de la platine, sur le côté orienté vers le circuit imprimé et la bobine plate pouvant être intégrée dans le circuit imprimé, par soudure, de préférence avec une pâte de soudure pour le pontage.

8. Capteur avec un élément de capteur selon la revendication 7, **caractérisé en ce que** la bobine plate (N), le film magnétique doux et, le cas échéant, le film de cuivre sont intégrés dans un circuit imprimé ou une platine.

9. Capteur selon la revendication 7 ou 8, **caractérisé en ce que** le capteur forme un module de capteur qui est disposé ou intégré de manière quelconque sur un circuit imprimé ou sur un support de circuit.

10. Procédé de fabrication d'un capteur, à l'aide d'un élément de capteur selon l'une des revendications 1 à 6, **caractérisé par** la réalisation d'une disposition multicouche selon laquelle, au moins après la couche de bobine ou les couches de bobines et une ou plusieurs couches d'isolation, est inséré un film magnétique doux, une couche d'isolation supplémentaire étant appliquée au-dessus du film magnétique doux.

11. Procédé selon la revendication 10, **caractérisé en ce que**, des deux côtés et symétriquement par rapport à la couche de bobine ou des couches de bobines, la structure des couches est complétée dans les deux directions, par exemple par un film magnétique doux et une surface/un film de cuivre disposé au-dessus.

12. Procédé selon la revendication 10 ou 11, **caractérisé en ce que** la disposition des couches est protégée, de préférence des deux côtés, par une peinture supplémentaire.

13. Procédé selon l'une des revendications 10 à 12, **caractérisé en ce que** des raccords de bobines et des surfaces de contact pour les surfaces conductrices sont réalisées soit par des métallisations latérales soit pas des métallisations de trous.

14. Procédé selon l'une des revendications 10 à 12, **caractérisé en ce que** le matériau existe d'abord sous la forme d'une bande et est découpé en bandelettes adaptées, la longueur des bandelettes correspondant à un multiple de la longueur du module de capteur.

15. Procédé selon la revendication 14, **caractérisé en ce que** la découpe à la longueur de module souhaitée a lieu par séparation du module de capteur fini lors de la fabrication.
